# EUROPÄISCHE PATENTANMELDUNG

(11) **EP 2 127 926 A1**
(43) Veröffentlichungstag der Anmeldung: **02.12.2009**
(21) Anmeldenummer: 09007013.7
(22) Anmeldetag: 26.05.2009
(51) Int. Cl.: B60J 5/04

(54) **Strukturbauteil für ein Fahrzeug**

(30) Priorität: 30.05.2008 DE 102008026139
(71) Anmelder: DURA Automotive Body & Glass Systems GmbH, 58840 Plettenberg (DE)
(72) Erfinder: Peters, Dirk, Dr., 59909 Bestwig (DE)
(74) Vertreter: Zinnecker, Armin

(57) **Zusammenfassung**

Ein verbessertes Strukturbauteil für ein Fahrzeug ist **dadurch gekennzeichnet, daß** der Querschnitt des Strukturbauteils (1) einen Hinterschnitt (2, 3) aufweist (Fig. 2).

## Beschreibung

Die Erfindung betrifft ein Strukturbauteil, insbesondere einen Seitenaufprallträger, für ein Fahrzeug, insbesondere ein Kraftfahrzeug.

Strukturbauteile für Kraftfahrzeuge sind bereits bekannt. Sie werden insbesondere auf Zug, Druck und/oder Biegung belastet.

Aufgabe der Erfindung ist es, ein verbessertes Strukturbauteil für ein Fahrzeug vorzuschlagen.

Erfindungsgemäß wird diese Aufgabe dadurch gelöst, daß der Querschnitt des Strukturbauteils einen Hinterschnitt aufweist. Hierdurch wird ein besserer Widerstand gegen Belastungen erreicht. Insbesondere ist das erfindungsgemäße Strukturbauteil widerstandsfähiger gegen Biegebelastungen. Durch die Erfindung kann ein Strukturbauteil für ein Fahrzeug realisiert werden, welches unter Biegebeanspruchung im Crash-Fall einen verlängerten Verformungsweg erhält, bevor es zu Materialversagen aufgrund von Wandstärkenreduzierung als Folge von plastischer Verformung während der Belastung kommt. Insbesondere kann durch den Hinterschnitt im Querschnitt erreicht werden, daß die Verformungsenergie durch ein definiertes "gutmütiges Falten" des Profils absorbiert wird. Dabei wird die zu absorbierende Energie derart in das Strukturbauteil eingeleitet, daß bestimmte lokale Bereiche nicht frühzeitig unter zu hohe Zugbeanspruchung kommen, was zu Rissbildung und Materialversagen führen würde.

Durch die erfindungsgemäße Lösung kann bei sonst gleichen Parametern des Strukturbauteils (Wandstärke, Coil-Breite, Gewicht, Material) ein höheres Kraftniveau und damit eine höhere Energie-Absorption im Crash-Fall erzielt werden. Bei bestimmten Lastanforderungen können geringere Blech-Wandstärken verwendet werden, was zusätzlich zu einer erheblichen Gewichtseinsparung führt. Das erfindungsgemäße Strukturbauteil bietet deutliche Performance- und Kostenvorteile im Vergleich zu konventionellen Strukturbauteilen, insbesondere Walzprofilen, ohne Hinterschnitt und auch zu Pressteilen ohne Hinterschnitt.

Vorteilhafte Weiterbildungen sind in den Unteransprüchen beschrieben.

Der Querschnitt des Strukturbauteils weist vorzugsweise zwei Hinterschnitte auf. Es ist ferner möglich, noch mehr Hinterschnitte im Querschnitt des Strukturbauteils vorzusehen.

Vorteilhaft ist es, wenn der Querschnitt des Strukturbauteils symmetrisch ist.

Eine weitere vorteilhafte Weiterbildung ist **dadurch gekennzeichnet, daß** sich an jeden Hinterschnitt ein Bogen anschließt. Jedem Hinterschnitt ist also ein Bogen zugeordnet. Insbesondere können zwei Bögen vorhanden sein, an die sich jeweils ein Hinterschnitt anschließt.

Nach einer weiteren vorteilhaften Weiterbildung schließt sich an zwei Hinterschnitte ein Bogen an. In diesem Fall sind zwei Hinterschnitte einem Bogen zugeordnet. Der Bogen ist mit diesen beiden Hinterschnitten verbunden.

Ausführungsbeispiele der Erfindung werden nachstehend anhand der beigefügten Zeichnung im einzelnen erläutert. In der Zeichnung zeigt
- Fig. 1: einen Seitenaufprallträger eines Kraftfahrzeugs in einer perspektivischen Ansicht,
- Fig. 2: einen Querschnitt durch den Seitenaufprallträger gemäß Fig. 1,
- Fig. 3: den Seitenaufprallträger gemäß Fig. 1 und 2 nach einer Verformung durch einen Crash,
- Fig. 4: einen herkömmlichen Seitenaufprallträger nach einer Verformung durch einen Crash,
- Fig. 5: jeweils eine Kraft-Weg-Kurve eines erfindungsgemäßen und eines herkömmlichen Seitenaufprallträgers,
- Fig. 6: jeweils eine Energieaufnahme-Weg-Kurve eines erfindungsgemäßen und eines herkömmlichen Seitenaufprallträgers,
- Fig. 7: eine perspektivische Darstellung des Querschnitts durch den Seitenaufprallträger gemäß Fig. 1 bis 3,
- Fig. 8: einen Querschnitt durch einen Seitenaufprallträger ähnlich demjenigen der Fig. 1 bis 3 und 7 ohne Hinterschnitte in einer der Fig. 7 entsprechenden Darstellung,
- Fig. 9: eine Abwandlung eines Seitenaufprallträgers mit zwei Hinterschnitten, die miteinander durch einen Bogen verbunden sind, in einer perspektivischen Darstellung,
- Fig. 10: den Seitenaufprallträger gemäß Fig. 9 ohne Hinterschnitte und
- Fig. 11: eine Fahrzeugtür mit einem Seitenaufprallträger in einer Seitenansicht von innen.

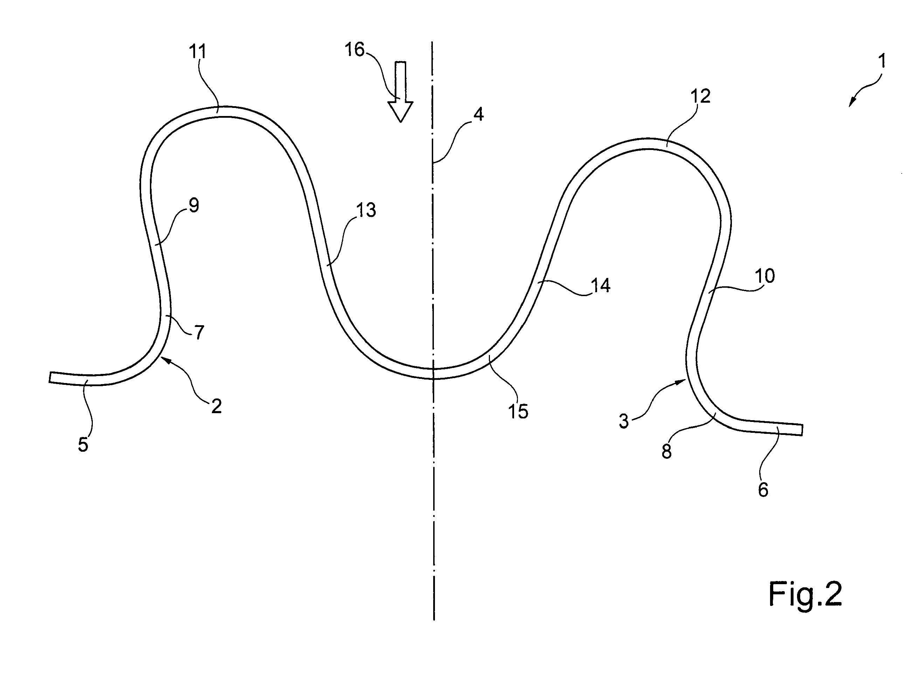

Das in der Zeichnung gezeigte Strukturbauteil, bei dem es sich um einen Seitenaufprallträger 1 für ein Kraftfahrzeug, insbesondere für eine Kraftfahrzeugtüre, handelt, weist in seinem Querschnitt einen Hinterschnitt 2 und einen weiteren Hinterschnitt 3 auf. Der Querschnitt ist symmetrisch ausgestaltet, wobei die Symmetrieachse in Fig. 2 mit dem Bezugszeichen 4 versehen ist.

Der Querschnitt des Seitenaufprallträgers 1 weist Endabschnitte 5, 6 auf, die miteinander fluchten, die also auf derselben Gerade liegen. An jeden Endabschnitt schließt sich über einen Bogen 7, 8 ein gerader Abschnitt 9, 10 an. Der jeweilige Bogen 7, 8 überstreicht einen Winkel von mehr als 90°, vorzugsweise 95° bis 110°, vorzugsweise 100°. Infolgedessen schließt der jeweilige Endabschnitt 5, 6 mit dem jeweiligen geraden Abschnitt 9, 10 einen spitzen Winkel ein.

An die gerade Abschnitte 9, 10 schließt sich jeweils ein weiterer Bogen 11, 12 an. Der weitere Bogen 11, 12 überstreicht einen Winkel von im wesentlichen 180°. An den weiteren Bogen 11, 12 schließt sich jeweils ein weiterer gerader Abschnitt 13, 14 an. Im Ausführungsbeispiel verläuft der weitere gerade Abschnitt 13 im wesentlichen parallel zum geraden Abschnitt 9 und der weitere gerade Abschnitt 14 im wesentlichen parallel zum geraden Abschnitt 10. Die weiteren geraden Abschnitte 13, 14 gehen in einem mittleren Bogen 15 ineinander über. Die Symmetrieachse 4 schneidet den mittleren Bogen 15 in seiner Mitte.

Die Hinterschnitte des Querschnitts des Seitenaufprallträgers 1 werden von den geraden Abschnitten 9, 10 und Teilen der daran anschließenden Bögen 7 gebildet. Es handelt sich um Hinterschnitte in Bezug auf eine Richtung 16 parallel zur Symmetrieachse 4 in einer Richtung in Fig. 2 von oben nach unten. In Bezug auf diese Richtung 16 bilden die weiteren geraden Abschnitte 13, 14 keine Hinterschnitte.

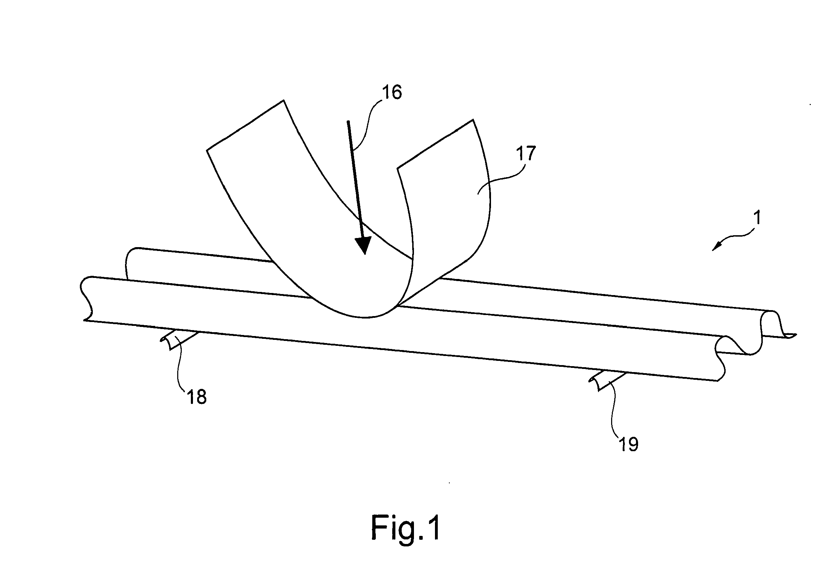

Fig. 1 zeigt einen typischen Crash-Lastfall für ein Strukturbauteil, insbesondere einen Seitenaufprallträger 1, bei dem eine Barriere 17 mit dem Seitenaufprallträger 1 kollidiert. Die Barriere 17 ist im wesentlichen zylinderförmig. Insbesondere handelt es sich um eine Pfahl-Barriere. Sie trifft in einer zur Längserstreckung des Seitenaufprallträgers 1 senkrechten Richtung 16 auf den Seitenaufprallträger 1. Die Bewegungsrichtung 16 verläuft in Fig. 2 parallel zur Symmetrieachse 4 in einer Richtung von oben nach unten.

In dem Crash-Lastfall nach Fig. 1 wird der Seitenaufprallträger 1 auf Biegung beansprucht. Er biegt sich zwischen den Auflagen 18, 19 nach unten. Bei diesem Lastfall bewirken die Hinterschnitte 2, 3 ein höheres Kraftniveau, ein gutmütigeres Verformungsverhalten und ein späteres Materialversagen im Vergleich zu einem Profil ohne diese Hinterschnitte.

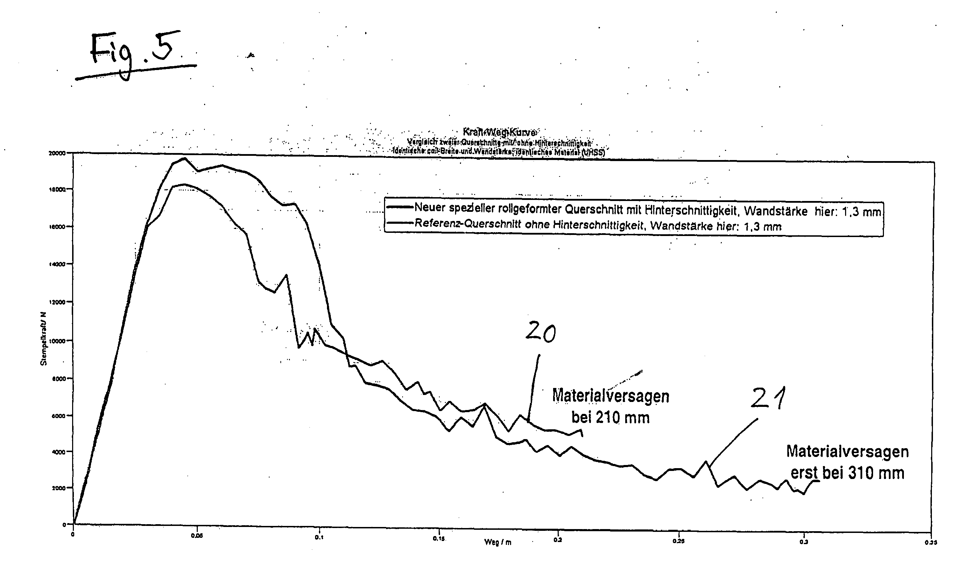

Dies ist in Fig. 5 beispielhaft dargestellt. Fig. 5 zeigt eine Kraft-Weg-Kurve mit einem Vergleich zweier Querschnitte mit und ohne Hinterschnittigkeit bei identischer coil-Breite und Wandstärke und mit identischem Material (UHSS). In der waagrechten Achse ist der Weg in m aufgetragen, in der senkrechten Achse die Stempelkraft in N. In die Fig. 5 ist der Kraft-Weg-Verlauf 20 eines Seitenaufprallträgers ohne Hinterschnitte eingezeichnet, bei dem das Materialversagen bereits bei einem Weg von 210 mm eintritt. Ein ansonsten gleicher Seitenaufprallträger mit Hinterschnitten 2, 3 hat den Kraft-Weg-Verlauf 21, bei dem das Materialversagen erst bei einem Weg von 310 mm eintritt.

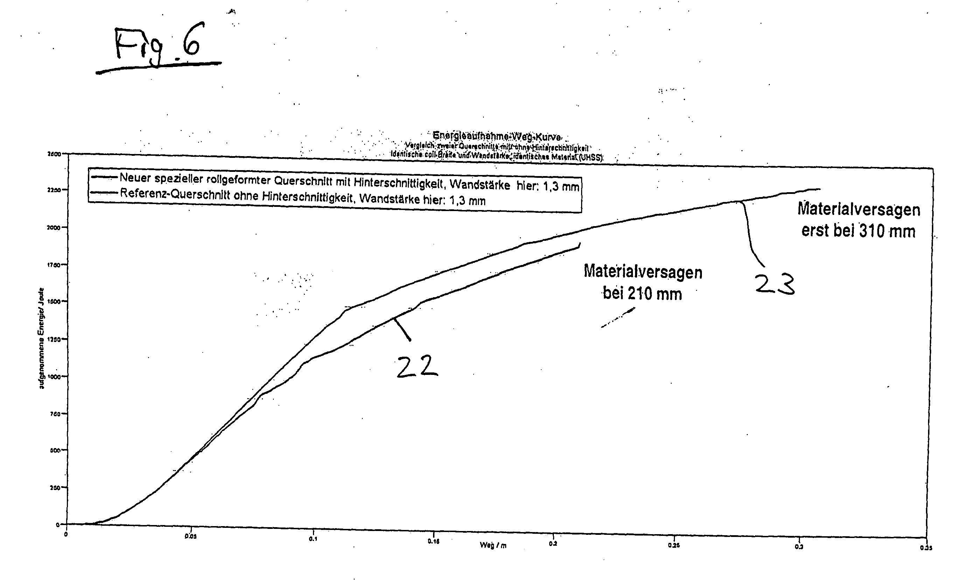

Fig. 6 zeigt eine zugehörige Energieaufnahme-Weg-Kurve, bei der ebenfalls die beiden Querschnitte mit und ohne Hinterschnittigkeit eingetragen sind, wobei es sich um dieselben Bauteile handelt wie in Fig. 5 mit identischer coil-Breite und Wandstärke und identischem Material (UHSS). Waagrecht ist der Weg in m aufgetragen, senkrecht die aufgenommene Energie in Joule. Die Energieaufnahme-Weg-Kurve des Seitenaufprallträgers ohne Hinterschnitte ist mit dem Bezugszeichen 22 versehen. Dieses Bauteil hat einen Referenz-Querschnitt ohne Hinterschnittigkeit mit einer Wandstärke von 1,3 mm, wie bei Fig. 5. Die Energieaufnahme-Weg-Kurve 23 gehört zu einem erfindungsgemäßen Seitenaufprallträger mit einem erfindungsgemäßen rollgeformten Querschnitt mit Hinterschnittigkeit mit einer Wandstärke von ebenfalls 1,3 mm, wie bei dem entsprechenden Seitenaufprallträger in Fig. 5. Das Materialversagen des erfindungsgemäßen Seitenaufprallträgers erfolgt erst bei 310 mm, gegenüber 210 mm bei der Kurve 22.

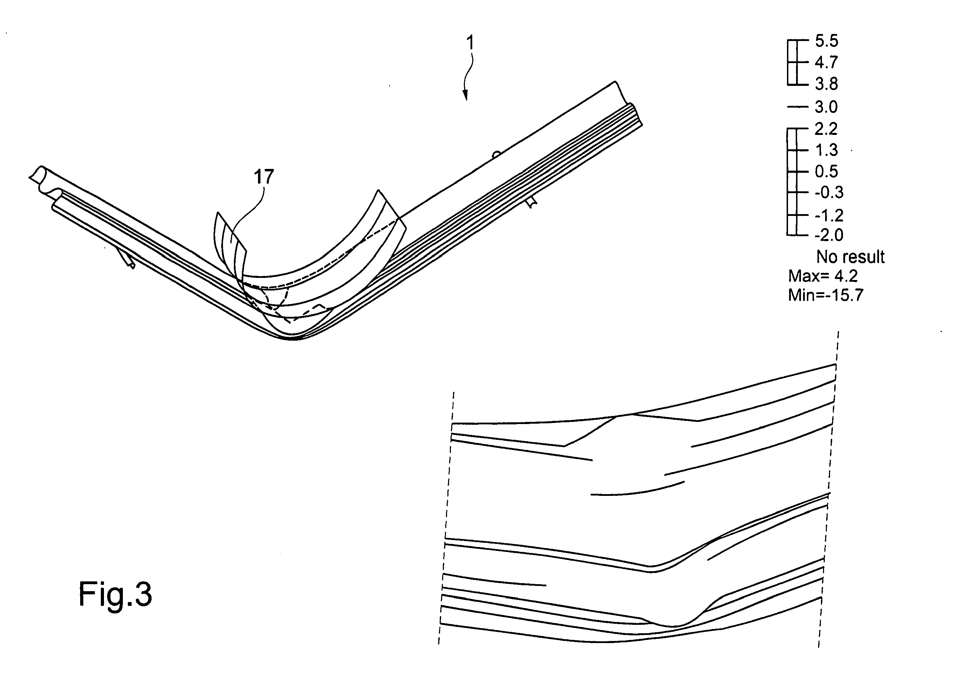

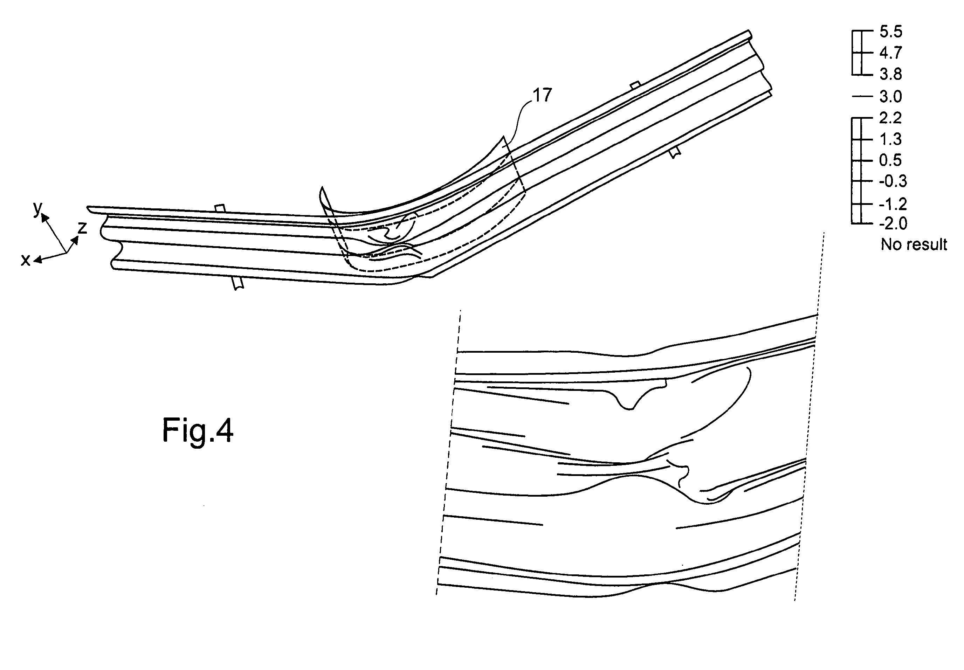

Die beiden Seitenaufprallträger gemäß Fig. 5 und 6 sind in Fig. 3 und Fig. 4 in jeweils verformtem Zustand dargestellt. Fig. 3 zeigt die verformte Struktur nach 210 mm Barrierenweg bei dem Strukturbauteil mit Hinterschnittigkeit, also dem Strukturbauteil gemäß den Kurven 21 und 23 in Fig. 5 und 6. Ein Materialversagen tritt bei diesem Profil bei sonst identischen Randbedingungen nicht auf.

Fig. 4 zeigt eine entsprechende Darstellung des herkömmlichen Strukturbauteils gemäß den Kurven 20 und 22 in Fig. 5 und 6. Dieses Strukturbauteil zeigt ein ungünstiges Faltungsverhalten nach einem Barrierenweg von 210 mm. Hier erfolgt ein frühzeitiges Materialversagen bei sonst identischen Randbedingungen.

Das in den Ausführungsbeispielen gezeigte, erfindungsgemäße Strukturbauteil ist als rollgeformter Profilquerschnitt hergestellt. Es weist Hinterschnittigkeiten 2, 3 auf. Der spezielle Profilquerschnitt mit Hinterschnittigkeit im unteren Bereich kann insbesondere für crash-relevante Automobil-Strukturteile aus hochfestem und ultrahochfestem Stahl verwendet werden. In dem in Fig. 1 gezeigten typischen Crash-Lastfall trifft eine Pfahl-Barriere 17 senkrecht 16 auf das Profil 1, nämlich auf das Strukturbauteil mit hinterschnittigem offenen Profilquerschnitt. Fig. 5 zeigt einen relativen Vergleich des Kraft-Weg-Verlaufs des in Fig. 1 dargestellten Lastfalls. Bei dem erfindungsgemäßen Profil mit Hinterschnittigkeit sind ein höheres Kraftniveau und ein gutmütigeres Verformungsverhalten (späteres Materialversagen) bei sonst identischen Bedingungen möglich. Dieselben Ergebnisse folgen aus dem in Fig. 6 dargestellten relativen Vergleich des Energie-Weg-Verlaufs.

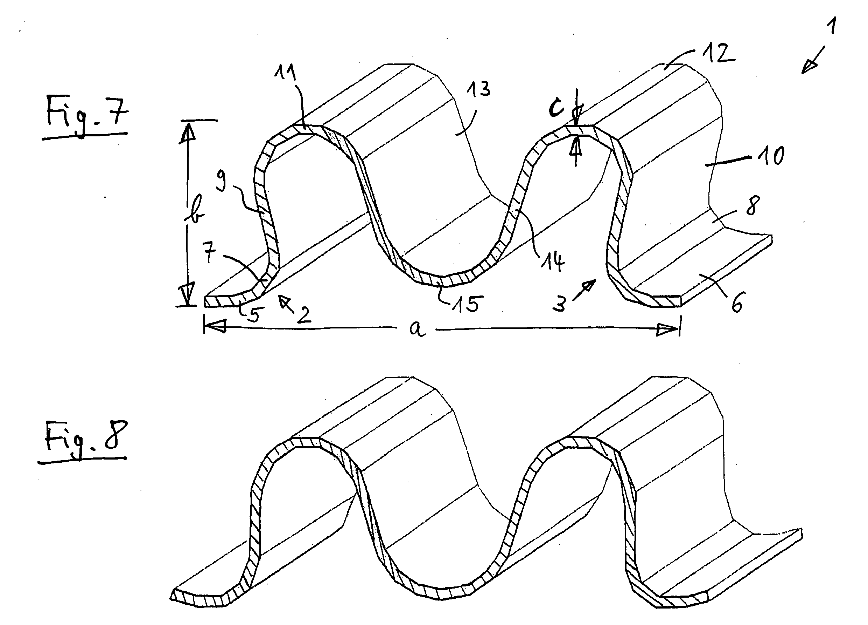

Fig. 7 zeigt den Seitenaufprallträger gemäß Fig. 2 in einer weiteren, perspektivischen Darstellung. Es handelt sich um ein rollgeformtes Zwei-Wellenprofil mit zwei Hinterschnitten 2, 3. Die Breite a beträgt 80 mm. Typische Breiten für derartige Seitenaufprallträger betragen mindestens 50 mm. Die Höhe b beträgt 25 mm. Typische Höhen für derartige Seitenaufprallträger betragen mindestens 20 mm. Die Wandstärke c beträgt 1,3 mm. Typische Wandstärken für Seitenaufprallträger betragen mindestens 0,7 mm. Bei der Ausführungsform nach Fig. 2 und 7 schließt sich an jeden Hinterschnitt 2, 3 ein Bogen 11, 12 an. Jedem Hinterschnitt 2, 3 ist also jeweils ein Bogen 11, 12 zugeordnet.

Fig. 8 zeigt im Vergleich dazu den Querschnitt eines Seitenaufprallträgers, der ein klassisches rollgeformtes oder gepreßtes Zwei-Wellenprofil ohne Hinterschnitte aufweist.

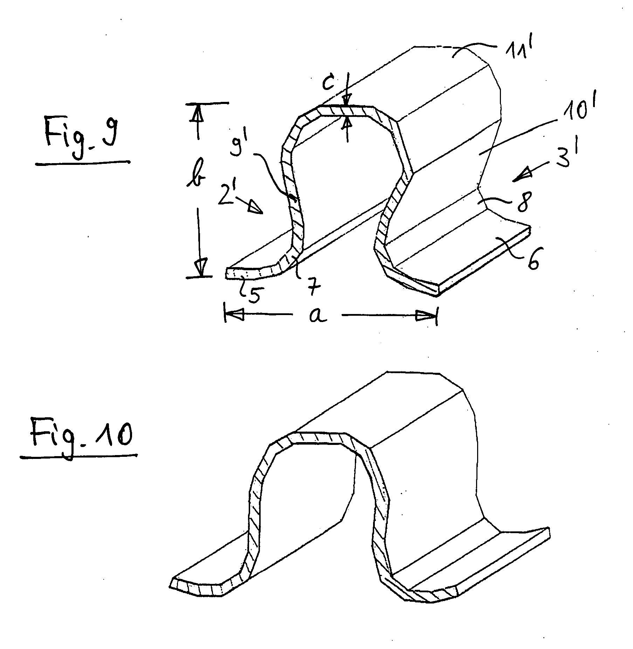

Fig. 9 zeigt eine Abwandlung eines Seitenaufprallträgers, der zwei Hinterschnitte 2', 3' aufweist, an die sich ein Bogen 11' anschließt. Hier ist den beiden Hinterschnitten 2', 3' nur ein Bogen 11' zugeordnet. Die beiden Hinterschnitte 2', 3' bzw. deren gerade Abschnitte 9', 10' sind also nur durch einen Bogen 11' miteinander verbunden.

Die Breite a des Profils gemäß Fig. 9 beträgt 30 mm. Typischerweise beträgt die Breite a von Seitenaufprallträgern mit dieser Profilform mindestens 20 mm. Die Höhe b beträgt 25 mm. Typisch sind Höhen b von mindestens 20 mm. Die Wandstärke beträgt 1,3 mm. Typisch sind Wandstärken von mindestens 0,7 mm.

Fig. 10 zeigt zum Vergleich einen Seitenaufprallträger mit einem klassischen rollgeformten oder gepreßten Ein-Wellenprofil ohne Hinterschnitte.

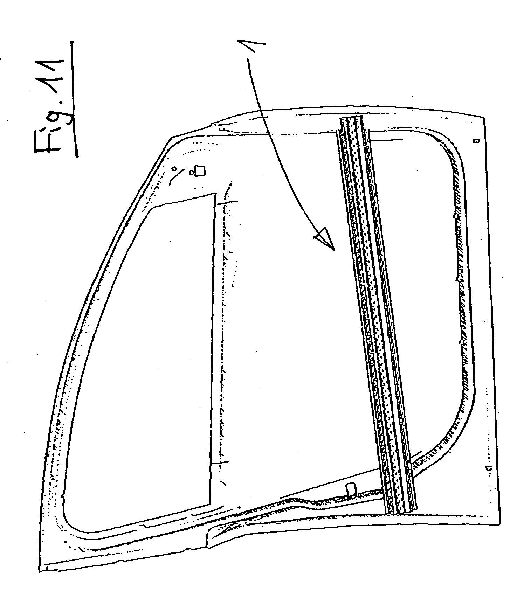

Fig. 11 zeigt eine Seitentür eines Kraftfahrzeugs mit einem Seitenaufprallträger 1, der unterhalb der Fensteröffnung in einer im wesentlichen waagrechten Richtung verläuft.

## Patentansprüche

1. Strukturbauteil für ein Fahrzeug,
**dadurch gekennzeichnet,**
**daß** der Querschnitt des Strukturbauteils (1) einen Hinterschnitt (2, 3; 2', 3') aufweist.

2. Strukturbauteil nach Anspruch 1, **dadurch gekennzeichnet, daß** des Querschnitt des Strukturbauteils (1) zwei Hinterschnitte (2, 3; 2', 3') aufweist.

3. Strukturbauteil nach Anspruch 1 oder 2, **dadurch gekennzeichnet, daß** der Querschnitt des Strukturbauteils (1) symmetrisch ist.

4. Strukturbauteil nach einem der vorhergehenden Ansprüche, **dadurch gekennzeichnet, daß** sich an jeden Hinterschnitt (2, 3) ein Bogen (11, 12) anschließt.

5. Strukturbauteil nach einem der Ansprüche 1 bis 3, **dadurch gekennzeichnet, daß** sich an zwei Hinterschnitte (2', 3') ein Bogen (11') anschließt.
